# EUROPÄISCHE PATENTSCHRIFT

(11) **EP 3 586 625 B1**
(45) Veröffentlichungstag und Bekanntmachung des Hinweises auf die Patenterteilung: **04.08.2021**
(21) Anmeldenummer: 19401018.7
(22) Anmeldetag: 17.05.2019
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE

(30) Priorität: 21.06.2018 DE 102018114908
(43) Veröffentlichungstag der Anmeldung: 01.01.2020
(73) Patentinhaber: Amazonen-Werke H. Dreyer SE & Co. KG, 49205 Hasbergen (DE)
(72) Erfinder: Austermann, Stefan, 48291 Telgte (DE); Lampe, Toivo, 49080 Osnabrück (DE)

(56) Entgegenhaltungen:
- EP-A1- 3 162 207
- DE-A1- 3 624 425

## Beschreibung

Die Erfindung betrifft eine landwirtschaftliche Feldspritze gemäß dem Oberbegriff des Patentanspruches 1.

Eine derartige landwirtschaftliche Feldspritze ist in der EP 3 162 207 A1 beschrieben. Diese Feldspritze umfasst einen an sich bekannten Spritzmittelkreislauf zur Bereitstellung einer Spritzbrühe aus Frischwasser und/oder Pflanzenschutzmittel. Diese Spritzbrühe ist zur Ausbringung mittels eines eine Mehrzahl von Düsen aufweisenden Spritzgestänges auf einem Feld vorgesehen.

Zur Bereitstellung und Ausbringung der Spritzbrühe umfasst der Spritzmittelkreislauf verschiedenste Fluidbauteile, welche mittels Fluidleitungen strömungsleitend verbunden sind. Um durch die Vielzahl von Fluidleitungen und Fluidbauteilen einen großbauenden und komplexen Aufbau zu vermeiden, ist bei dieser Feldspritze zumindest ein Fluidblock vorgesehen.

Durch den Fluidblock werden mehrere Fluidbauteile zu separat und/oder gruppenweise ansteuerbaren Funktionseinheiten zusammengefasst. Auf diese Weise wird ein kompakter Aufbau erreicht. Dieser kompakte Aufbau erschwert allerdings gleichzeitig die Herstellung eines entsprechenden Fluidblocks. Daher ist bei dieser Feldspritze vorgesehen, den Fluidblock beispielsweise mittels eines 3D-Druckers herzustellen. Dieses Herstellungsverfahren ist nicht nur kostenintensiv, sondern erfordert derzeit noch zusätzliche Nachbearbeitungsschritte durch konventionelle, bspw. spanabhebende, Fertigungsverfahren. Das heißt, die Herstellung eines derartigen Fluidblocks nutzt ein wenig verbreitetes, additives Fertigungsverfahren als Basis und benötigt darüber hinaus weitere, insgesamt mehrere Bearbeitungsschritte. Eine kostengünstige und einfache Herstellung kann somit nicht gewährleistet werden.

Die Aufgabe der vorliegenden Erfindung liegt daher darin, einen Fluidblock zu schaffen, welcher in einfacher und kostenmoderater Weise herstellbar ist.

Diese Aufgabe wird erfindungsgemäß durch eine Feldspritze gemäß Anspruch 1 gelöst. Es ist vorgesehen, dass der zumindest eine Fluidblock als Filterelement ausgeführt ist. Diese Erfindung macht sich die Erkenntnis zunutze, dass gattungsgemäße Feldspritzen regelmäßig zumindest ein Filterelement, welches ohnehin eine Vielzahl strömungsleitender Zu- und Abflüsse aufweist, umfassen. Erfindungsgemäß wurde die Feldspritze folglich dahingehend weitergebildet, dass nicht ein gesondertes Bauteil als Fluidblock vorgesehen ist, sondern vielmehr ein ohnehin vorzusehendes und in besonderer Weise geeignetes Bauteil, nämlich ein Filterelement, als solcher Fluidblock weitergebildet wird. Infolge dieser Maßnahme reduzieren sich nicht nur die Kosten zur Herstellung, sondern der Aufbau wird weiter vereinfacht und komprimiert. Erfindungsgemäße Filterelemente dienen weiterhin dem Zurückhalten ungelöster Fremdkörper aus dem Druckmedium.

Unter Fluidbauteilen sind erfindungsgemäß hauptsächlich aber nicht ausschließlich Ventile, Anschlüsse, Absperrventile, insbesondere ein Hahn zum Ablassen einer Restmenge und/oder zum Befüllen eines Filters, Fittinge, Sammelstücke oder aktive oder passive hydraulische Bauelemente zu verstehen. Nahezu alle Bauteile des Spritzmittelkreislaufs lassen sich somit in vorteilhafter Weise an einem erfindungsgemäßen Filterelement zu separat und/oder gruppenweise schaltbaren Funktionseinheiten zusammenfassen.

In einer vorteilhaften Ausführungsform der Erfindung ist vorgesehen, dass die Ventile als Sitzventile ausgeführt sind. Durch diese besonders platzsparende Bauform kann außerdem zusätzlich Totraum am Filterelement sinnvoll genutzt werden.

In einer weiteren vorteilhaften Weiterbildung der Erfindung umfasst das Filterelement ein Gehäuse, wobei die Fluidbauteile in das Gehäuse integriert sind. Die Fluidbauteile können in das Gehäuse des Filterelementes einschraubt und/oder gesteckt sein. Die Fluidbauteile sind auf diese Weise besonders einfach und sicher mit dem Filterelement verbunden. Die Integration in das Gehäuse ermöglicht außerdem einen besonders kompakten Aufbau und verringert das Leckagerisiko.

In einer weiteren vorteilhaften Weiterbildung der Erfindung ist vorgesehen, dass das Filterelement zumindest einen Filtereinsatz umfasst. Um eine möglichst große Filterfläche bei gleichzeitig kompaktem Aufbau aufzuweisen, ist der Filtereinsatz vorzugsweise zickzackförmig gefaltet und siebartig ausgebildet. Weiter ist in dieser Weiterbildung vorgesehen, dass der Filtereinsatz aus Metall, vorzugsweise Edelstahl, oder Kunststoff, vorzugsweise Polypropylen oder Polyamid, besteht. Diese Werkstoffe eignen sich besonders, da sie dem Filterelement die nötige Festigkeit verschaffen und zugleich einfach zu reinigen sind.

Der Filtereinsatz kann als ebenes Element ausgebildet sein, so dass mittels des Filtereinsatzes das Gehäuse des Filterelementes in ungefilterte und gefilterte Zu- und Abflüsse bzw. Anschlüsse, hierbei können verschiedene Abflüsse und/oder Anschlüsse zu Bereichen zusammengefasst sein, unterteilbar ist. Vorteilhaft ist hierbei, dass einige Funktionen der landwirtschaftlichen Feldspritze nicht erfordern, dass die Flüssigkeit gefiltert, das heißt nahezu frei von ungelösten Fremdkörpern, ist. In besonders zweckmäßiger Weise ist das Reinigungsintervall des Filtereinsatzes so verlängert, da nicht die gesamte Flüssigkeitsmenge über den Filtereinsatz aus dem Filterelement ausströmt und die zu filternde Flüssigkeit pro Zeitintervall somit reduziert ist.

Erfindungsgemäß ist vorgesehen, dass die landwirtschaftliche Feldspritze zumindest zwei Filterelemente umfasst, wobei zumindest ein Filterelement als Saugfilter und zumindest ein Filterelement als Druckfilter ausgeführt ist. Auf diese Weise kann ein durch den Saugfilter angesaugtes und durch den Druckfilter gefördertes Medium doppelt gefiltert werden, was dem Schutz zwischen- bzw. nachgeschalteter Bauteile besonders zuträglich ist.

In einer vorteilhaften Weiterbildung der vorbeschriebenen Ausführungsform der Erfindung ist unmittelbar stromabwärts des Saugfilters und unmittelbar stromaufwärts des Druckfilters eine Pumpe, insbesondere eine Kreiselpumpe, angeordnet. Vorteilhaft ist hierbei, dass durch die Pumpe angesaugtes Druckmedium im Saugfilter vorgefiltert wird und die Pumpe so zumindest annährend geschützt ist vor ungelösten Fremdkörpern, welche die Pumpe anderenfalls beschädigen könnten. Weiter vorteilhaft ist, dass unmittelbar nach der Pumpe das Druckmedium den Druckfilter durchströmt und nachgeschaltete Fluidbauteile so in besonderer Weise geschützt werden können. Außerdem können in dieser Ausführungsform weitere Fluidleitungen zu der Pumpe hin und von der Pumpe weg entfallen oder zumindest besonders kompakt gestaltet werden.

In einer weiteren vorteilhaften Weiterbildung dieser Ausführungsform ist vorgesehen, dass der Saugfilter und der Druckfilter durch ein Druckventil, vorzugsweise ein federbelastetes Druckbegrenzungsventil, strömungsleitend verbindbar sind. Dem Erreichen eines den Spritzmittelkreislauf der landwirtschaftlichen Feldspritze beschädigenden Druckniveaus ist so in besonders einfacher Weise vorgebeugt. Die Systemsicherheit ist folglich in besonders einfacher und kompakter Weise gesteigert.

Eine andere zweckmäßige Weiterbildung der Erfindung zeichnet sich dadurch aus, dass die zu Funktionseinheiten zusammengefassten Fluidbauteile ferngesteuert betätigbar, vorzugsweise elektrisch, pneumatisch oder hydraulisch ansteuerbar, sind. Besonders zuträglich ist hierbei, dass die Funktionseinheiten von der Führerkabine eines die landwirtschaftliche Feldspritze ziehenden oder tragenden Zugfahrzeugs aus betätigbar sind und der Fahrer hierzu nicht absteigen muss.

Weitere Einzelheiten der Erfindung sind der Beispielsbeschreibung und den Zeichnungen zu entnehmen. Die Zeichnungen zeigen
Fig.1 ein Flüssigkeitsplan einer erfindungsgemäßen Feldspritze als Prinzipdarstellung,
Fig.2 ein als Saugfilter ausgeführtes Filterelement in perspektivischer Ansicht,
Fig.3 ein als Druckfilter ausgeführtes Filterelement in perspektivischer Ansicht,
Fig.4 der Saugfilter, gemäß Fig.2, und der Druckfilter, gemäß Fig.3, in zusammengesetzter Bauweise und perspektivischer Ansicht, und
Fig.5 der Saugfilter und der Druckfilter in zusammengesetzter Bauweise, gemäß Fig.4, in Schnittansicht.

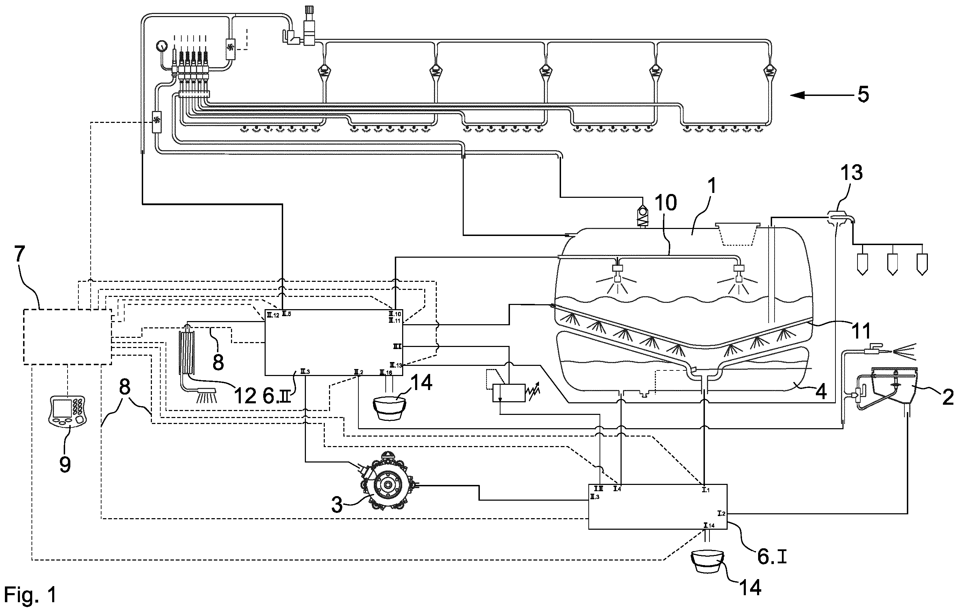

Die Prinzipdarstellung in Fig.1 zeigt einen Flüssigkeitsplan einer erfindungsgemäßen landwirtschaftlichen Feldspritze. Das zentrale Element des gezeigten Spritzmittelkreislaufs wird gebildet durch einen Spritzbrühetank 1 zur Bevorratung von Spritzbrühe. Zur Bereitstellung und Ausbringung der Spritzbrühe umfasst die landwirtschaftliche Feldspritze eine große Anzahl Fluidleitungen und verschiedenster Fluidbauteile. So kann dem Spritzmittelkreislauf beispielsweise über eine Einspülschleuse 2 ein Pflanzenschutzmittel zugeführt werden. Um Pflanzenschutzmittel aus der Einspülschleuse 2 abzusaugen und in den Spritzbrühetank 1 zu fördern, wo es spätestens mit frischem Wasser zu Spritzbrühe vermischt wird, umfasst die Feldspritze eine Pumpe 3. Die Pumpe 3 ist außerdem auf ihrer Saugseite mit dem Spritzbrühetank 1 und einem Frischwassertank 4 verbunden. Die Druckseite der Pumpe 3 versorgt neben dem Spritzbrühetank 1 unter anderem auch ein Spritzgestänge 5 mit druckbeaufschlagter Flüssigkeit. Über das Spritzgestänge 5 ist die Spritzbrühe auf einem Feld ausbringbar.

Wie vorstehend schon kurz angesprochen, werden die Pflanzenschutzmittel dem Spritzmittelkreislauf in teilweise gelöster flüssiger Form oder ungelöster Form beispielsweise als Pulver zugeführt. Hierzu kann das Pflanzenschutzmittel schon in der Einspülschleuse 2 mit Wasser versetzt werden. Es besteht allerdings die Gefahr, dass die aus der Einspülschleuse 2 abgesaugte Flüssigkeit nicht vollkommen frei von ungelösten Partikeln ist. Diese Partikel können in sämtlichen Fluidbauteilen des Spritzmittelkreislaufs Schaden anrichten und sollten daher so gut es geht aus der Flüssigkeit geklärt werden. Hierzu umfasst diese Feldspritze insgesamt zwei Filterelemente 6, wobei jeweils ein Filterelement 6 als Saugfilter 6.I und als Druckfilter 6.II ausgeführt ist. Der Saugfilter 6.I befindet sich unmittelbar stromabwärts und der Druckfilter 6.II unmittelbar stromaufwärts der Pumpe 3.

Die saugseitigen Verbindungen zur der Pumpe 3 werden somit zumindest teilweise von dem Saugfilter 6.I gefiltert, während die druckseitigen Verbindungen zusätzlich zumindest teilweise über den Druckfilter 6.II geklärt werden. An dem Saugfilter 6.I laufen somit alle saugseitigen Verbindungen zusammen, während sich von dem Druckfilter 6.II alle druckseitigen Verbindungen verteilen. Diese beiden Filterelemente 6 eignen sich daher in besonderer Weise zur Weiterbildung als Fluidblock, in welchem mehrere Fluidbauteile zu separat und/oder gruppenweise ansteuerbaren Funktionseinheiten zusammengefasst sind.

Fluidbauteile, das heißt in diesem Fall hauptsächlich als Sitzventile ausgeführte Ventile, Hähne oder Fittinge, befinden sich an jedem der Zu- bzw. Abflüsse der Filterelemente 6. Insbesondere die Ventile lassen sich von einer Steuer- und/oder Regeleinrichtung 7 der Feldspritze separat oder gruppenweise ansteuern. Hierzu ist die Steuer- und/oder Regeleinrichtung 7 über Signalleitungen 8 mit dem Saugfilter 6.I, dem Druckfilter 6.II und den einzelnen Ventilen verbunden. Eine weitere Signalleitung 8 verbindet die Steuer- und/oder Regeleinrichtung 7 mit einer Terminaleinheit 9. Die Terminaleinheit 9 ermöglicht dem Benutzer die Überwachung und Kontrolle der Funktionen der Feldspritze. So kann der Benutzer beispielsweise über die Terminaleinheit 9 in Zusammenwirken mit der Steuer- und/oder Regeleinrichtung 7 das Öffnen und Schließen der Ventile steuern und so beispielsweise bestimmen in welchem Verhältnis Pflanzenschutzmittel mit Wasser vermengt wird oder ob die Ausbringung über das Spritzgestänge 5 aktiviert wird.

Der Spritzbrühetank 1 umfasst außerdem eine Innenreinigung 10 und ein Rührwerk 11, welche durch Öffnen bzw. Schließen der jeweiligen Ventile am Druckfilter 6.II aktiviert bzw. deaktiviert werden. Außerdem kann dem Spritzbrühetank 1 weiteres Pflanzenschutzmittel mittels eines Injektors 13 auf Basis einer Venturieinrichtung zugeführt werden. Ebenso lässt sich eine Außenreinigung 12 in zuvor beschriebener Weise am Druckfilter 6.II zu- und abschalten. Selbiges Steuerungsprinzip gilt für den Saugfilter 6.I, an den der Spritzbrühetank 1, die Einspülschleuse 2, der Frischwassertank 4 und ein Restmengenauslass 14 über jeweils ein steuerbares Ventil angeschlossen sind. Vorteil der so an den Filterelementen 6 kompakt zusammengefassten Funktionseinheiten ist eine platzsparende und übersichtliche Bauweise.

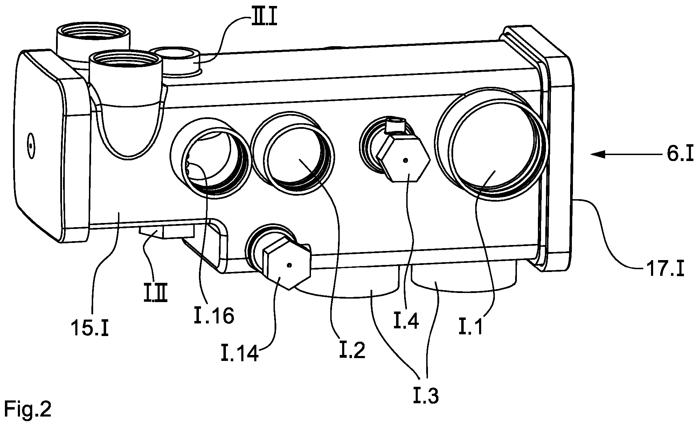

In Fig.2 ist der Saugfilter 6.I in perspektivischer Ansicht gezeigt. Der Saugfilter 6.I weist ein rechteckiges Gehäuse 15.I auf. Die Fluidbauteile, in diesem Fall Sitzventile und nicht gezeigte Fittinge bzw. ein Sammelstück, sind in das Gehäuse 15.I des Saugfilters 6.I integriert. Die Fluidbauteile sind entweder in das Gehäuse 15.I eingeschraubt oder ein- bzw. angesteckt und somit leckagerisikoarm mit diesem verbunden.

Die in Fig.2 gezeigten Sitzventile bestehen jeweils aus einem Ventilsitz, welcher dazu eingerichtet ist einen Anschluss des Saugfilters 6.I freizugeben oder zu verschließen, und einem mit dem Ventilsitz durch das Innere des Saugfilters 6.I verbundenen Ventilkopf. Der Ventilkopf ist gegenüber vom Ventilsitz in das Gehäuse 15.I eingeschraubt und ist über nicht dargestellte Signalleitungen 8 mit der Steuer- und/oder Regeleinrichtung 7 bzw. der Terminaleinheit 9 verbunden und so ferngesteuert betätigbar. In diesem Fall sind sämtliche Ventile hydraulisch ansteuerbar. Eine elektrische oder pneumatische Betätigung ist allerdings ebenso denkbar. Durch Senden eines entsprechenden Steuersignals an den Ventilkopf wird der zugehörige Ventilsitz von dem Anschluss angehoben bzw. auf diesem abgesenkt.

Im Einzelnen zeigt Fig.2 das Ventil I.1 zum Anschluss des Spritzbrühetanks 1, das Ventil I.2 zum Anschluss der Einspülschleuse 2, das Ventil I.4 zum Anschluss des Frischwassertanks 4, das Ventil I.14 zum Ablassen einer Restmenge aus dem Saugfilter 6.I und die Anschlüsse I.3 zur Pumpe 3 hin, auf die nicht gezeigte Fittinge oder ein Sammelstück aufsteckbar sind.

Darüber hinaus weist der Saugfilter 6.I ein federbelastetes Druckbegrenzungsventil I.II auf, durch das der Saugfilter 6.I mit dem Druckfilter 6.II strömungsleitend verbindbar ist. Durch das Druckbegrenzungsventil I.II wird verhindert, dass der Systemdruck ein gewisses Niveau übersteigt. Außerdem ist ein weiterer Anschluss I.16 zu sehen. Über den Anschluss I.16 kann mittels der Pumpe 3 über den Saugfilter 6.I Flüssigkeit aus einer externen Quelle, wie bspw. einem Wassertank oder Gewässer, angesaugt und so dem Spritzmittelkreislauf zugeführt werden. Zur Reinigung des Saugfilter 6.I umfasst sein Gehäuse 15.I einen abnehmbaren Deckel 17.1.

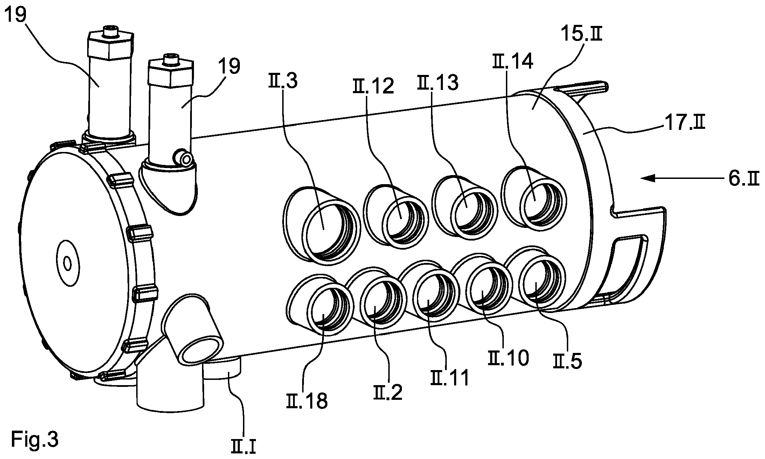

In Fig.3 ist der Druckfilter 6.II in perspektivischer Ansicht gezeigt. Die gezeigten Sitzventile weisen eine analoge Bauform und Funktionsweise wie die des Saugfilters 6.I auf. So zeigt Fig.3 das Ventil 11.12 zur Betätigung der Außenreinigung 12, das Ventil II.13 zur Verwendung des Injektors 13, das Ventil II.14 zur Schnellentleerung des Spritzmittelkreislaufs, das Ventil II.5 zur Versorgung des Spritzgestänges 5, das Ventil II.10 zur Verwendung der Innenreinigung im Spritzbrühetank 1, das Ventil II.11 zur Verwendung des Rührwerks 11 im Spritzbrühetank 1, das Ventil II.2 zur Einspülschleuse 2 hin und ein Ventil 11.18 zu einem nicht gezeigten Nebenrührwerk des Spritzbrühetanks 1. Des Weiteren sind zwei Regelventile 19 zu sehen. Über die Regelventile 19 kann optional ein Teil der im Druckfilter 6.II gefilterten Flüssigkeit direkt zum Saugfilter 6.I zurückgeleitet werden. Die Regelventile 19 sind ebenfalls mittels der Steuer- und/oder Regeleinrichtung 7 fernsteuerbar. Im Betrieb der Feldspritze können die beiden Regelventile 19 genutzt werden, um die zu den anderen Funktionen der Feldspritze geförderte Menge zu begrenzen, indem ein Teil der von der Pumpe 3 geförderten Flüssigkeit bewusst zurückgeleitet wird.

Der Druckfilter 6.II umfasst ein rundes Gehäuse 15.II, welches an seiner Vorderseite mit einem runden abnehmbaren Deckel 17.11 wiederverschließbar abgedichtet ist. Außerdem umfasst der Druckfilter 6.II den Anschluss II.I über das Druckbegrenzungsventil I.II zum Saugfilter 6.I hin und einen Anschluss II.3 in den die von der Pumpe 3 geförderte Flüssigkeit einströmt

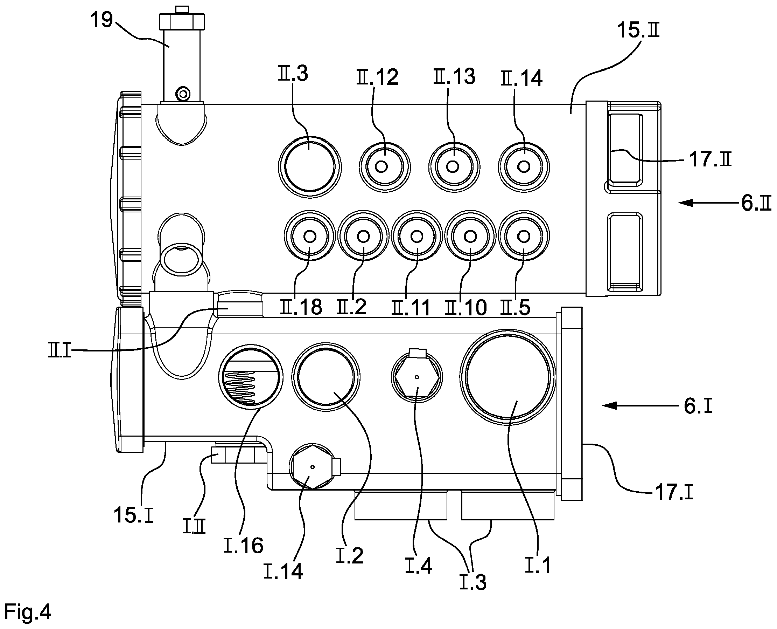

Bei dieser Feldspritze sind der Saugfilter 6.I und der Druckfilter 6.II in einer zusammengesetzten Bauweise ausgeführt, wie Fig. 4 in perspektivischer Ansicht zeigt. Der Saugfilter 6.I ist vorrangig über die Anschlüsse I.3 und die zwischengeschaltete, nicht abgebildete Pumpe 3 mit dem Anschluss II.3 des Druckfilters 6.II verbunden. Der Rückfluss vom Druckfilter 6.II zum Saugfilter 6.I ist entweder durch Überschreiten eines bestimmten Druckniveaus über das Druckbegrenzungsventil I.II möglich und/oder indem die Regelventile 19 einen gesteuerten Rückfluss freigeben.

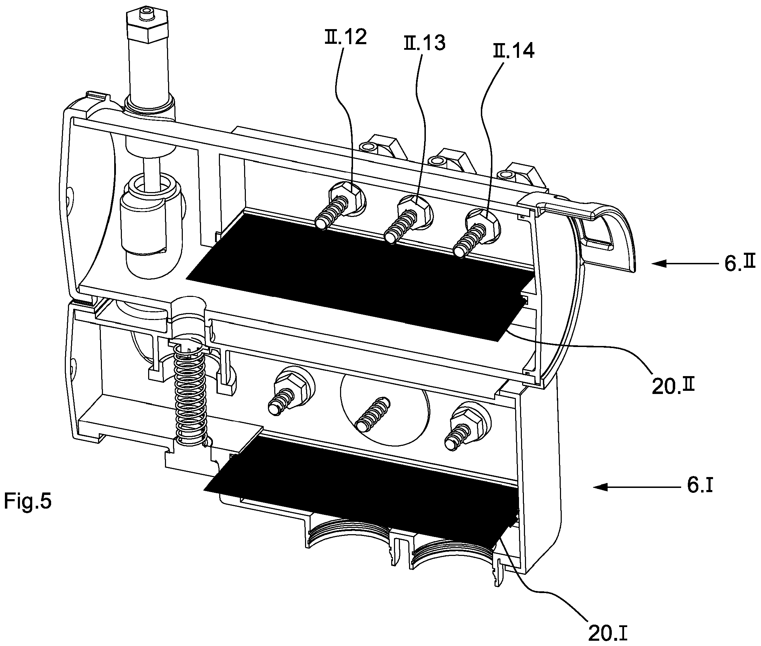

In FIg.5 sind der Saugfilter 6.I und der Druckfilter 6.II in zusammengesetzter Bauweise in Schnittansicht zu sehen. Beide Filterelemente 6 umfassen einen Filtereinsatz 20.1, 20.11. Dieser Filtereisatz 20.1, 20.11 dient dem Trennen von ungelösten Fremdkörpern aus der Flüssigkeit. Hierzu ist der Filtereinsatz 20.I, 20.II siebartig ausgebildet, so dass die Flüssigkeit ungehindert hindurchtreten kann, während enthaltene Fremdkörper aufgefangen werden. Um den Filtereinsatz 20.1, 20.11 mit einer möglichst großen Filterfläche zu schaffen, ist dieser vorzugsweise zickzackförmig gefaltet. Somit wird für die Flüssigkeit eine größere Fläche geschaffen durch die sie hindurchtreten kann, während der Bauraum des Filtereinsatzes 20.1, 20.11 nahezu unverändert bleibt. Um ein stabiles und gut zu reinigendes Bauteil zu erhalten, ist der Filtereinsatz 20.1, 20.11 aus einem Edelstahl gebildet. Ebenso denkbar ist, dass der Filtereinsatz 20.1, 20.11 aus einem ausreichend festen Kunststoff, wie Polypropylen oder Polyamid, besteht.

Bei dieser Feldspritze sind die Filtereinsätze 20.1, 20.II jeweils als ebenes Element ausgebildet und in nahezu horizontaler Ebene eingesetzt, so dass sie mit dem Gehäuse 15.I, 15.II abschließen. Das jeweilige Filterelement 6 wird somit durch den Filtereinsatz 20.1, 20.11 unterteilt. Folglich weist der Druckfilter 6.II die ungefilterten Auslässe 11.12, II.13 und 11.14 auf, während alle weiteren Anschlüsse strömungstechnisch hinter dem Filtereinsatz 20.II liegen und somit gefiltert sind. Der Saugfilter 6.I umfasst mehrere Einlässe vor dem Filtereinsatz 20.I, so dass nur die Auslässe I.3 und I.14 gefiltert sind. Zur Reinigung der Filtereinsätze 20.1, 20.II können diese entnommen werden indem die Deckel 15.I, 15.II geöffnetwerden.

### Bezugszeichenliste

- 1: Spritzbrühetank
- 2: Einspülschleuse
- 3: Pumpe
- 4: Frischwassertank
- 5: Spritzgestänge
- 6: Filterelement
- 6.I: Saugfilter
- 6.II: Druckfilter
- 7: Steuer- und/oder Regeleinrichtung
- 8: Signalleitung
- 9: Terminaleinheit Innenreinigung
- 11: Rührwerk
- 12: Außenreinigung
- 13: Injektor
- 14: Restmengenauslass
- 15.I, 15.II: Gehäuse
- I.1 - I.14: Ventil (Saugfilter)
- I.II: Druckbegrenzungsventil
- I.3, I.16: Anschluss
- II.2 - II.18: Ventil (Druckfilter)
- 17.I, 17.II: Deckel
- 19: Regelventil
- 20.1, 20.II: Filtereinsatz

## Patentansprüche

1. Landwirtschaftliche Feldspritze mit einem Spritzmittelkreislauf, mit Fluidbauteilen, die mittels vorhandener Fluidleitungen strömungsleitend miteinander gekoppelt sind, wobei die Feldspritze zumindest einen Fluidblock aufweist, in welchem mehrere Fluidbauteile zu separat und/oder gruppenweise ansteuerbaren Funktionseinheiten zusammengefasst sind, wobei der zumindest eine Fluidblock als Filterelement (6) ausgeführt ist, **dadurch gekennzeichnet, dass** die landwirtschaftliche Feldspritze zumindest zwei Filterelemente (6) umfasst, dass zumindest ein Filterelement (6) als Saugfilter (6.I) ausgeführt ist und zumindest ein Filterelement (6) als Druckfilter (6.II) ausgeführt ist.

2. Landwirtschaftliche Feldspritze nach Anspruch 1, **dadurch gekennzeichnet, dass** die Fluidbauteile als Ventile (II.2 - II.18, II.2 - II.18), Anschlüsse (I.3, 1.16), Absperrventile, insbesondere ein Hahn zum Ablassen einer Restmenge und/oder zum Befüllen eines Filters, Fittinge, Sammelstücke oder aktive oder passive hydraulische Bauelemente ausgeführt sind.

3. Landwirtschaftliche Feldspritze nach Anspruch 2, **dadurch gekennzeichnet, dass** die Ventile (II.2 - II.18, II.2 - II.18) als Sitzventile ausgeführt sind.

4. Landwirtschaftliche Feldspritze nach zumindest einem der vorstehenden Ansprüche, **dadurch gekennzeichnet, dass** das Filterelement (6) ein Gehäuse (15.I, 15.11) umfasst, dass die Fluidbauteile in das Gehäuse (15.I, 15.II) integriert sind.

5. Landwirtschaftliche Feldspritze nach zumindest einem der vorstehenden Ansprüche, **dadurch gekennzeichnet, dass** das Filterelement (6) zumindest einen, vorzugsweise eine zickzackförmig gefaltete, siebartig ausgebildete Filterfläche aufweisenden, Filtereinsatz (20.1, 20.11) umfasst, dass der Filtereinsatz (20.I, 20.II) aus Metall, vorzugsweise Edelstahl, oder Kunststoff, vorzugsweise Polypropylen oder Polyamid, besteht.

6. Landwirtschaftliche Feldspritze nach zumindest einem der vorstehenden Ansprüche, **dadurch gekennzeichnet, dass** das Filterelement (6) zumindest einen ungefilterten Auslass und/oder zumindest einen gefilterten Auslass aufweist.

7. Landwirtschaftliche Feldspritze nach Anspruch 1, **dadurch gekennzeichnet, dass** unmittelbar stromabwärts des Saugfilters (6.I) und unmittelbar stromaufwärts des Druckfilters (6.II) eine Pumpe (3), insbesondere eine Kreiselpumpe, angeordnet ist.

8. Landwirtschaftliche Feldspritze nach Anspruch 1, **dadurch gekennzeichnet, dass** der Saugfilter (6.I) und der Druckfilter (6.II) durch ein Druckventil, vorzugsweise ein federbelastetes Druckbegrenzungsventil (I.II), strömungsleitend verbindbar sind.

9. Landwirtschaftliche Feldspritze nach zumindest einem der vorstehenden Ansprüche, **dadurch gekennzeichnet, dass** die zu Funktionseinheiten zusammengefassten Fluidbauteile ferngesteuert betätigbar, vorzugsweise elektrisch, pneumatisch oder hydraulisch ansteuerbar, sind.

## Claims

1. Agricultural field spraying device having a spraying agent circuit, having fluid components which are coupled to one another in a flow-conducting manner by means of provided fluid lines, wherein the field spraying device has at least one fluid block, in which a plurality of fluid components are combined to form functional units which are able to be activated separately and/or in groups, wherein the at least one fluid block is designed as a filter element (6), **characterized in that** the agricultural field spraying device comprises at least two filter elements (6), **in that** at least one filter element (6) is designed as a suction filter (6.1) and at least one filter element (6) is designed as a pressure filter (6.II) .

2. Agricultural field spraying device according to Claim 1, **characterized in that** the fluid components are designed as valves (II.2-II.18, II.2-II.18), connections (1.3, 1.16), shut-off valves, in particular a tap for draining a residual quantity and/or for filling a filter, fittings, collection parts or active or passive hydraulic structural elements.

3. Agricultural field spraying device according to Claim 2, **characterized in that** the valves (II.2-II.18, II.2-II.18) are designed as seat valves.

4. Agricultural field spraying device according to at least one of the preceding claims, **characterized in that** the filter element (6) comprises a housing (15.1, 15.11), **in that** the fluid components are integrated in the housing (15.I, 15.II).

5. Agricultural field spraying device according to at least one of the preceding claims, **characterized in that** the filter element (6) comprises at least one filter insert (20.I, 20.II) which is preferably folded in a zigzag-shaped manner and has a filter surface of sieve-like design, **in that** the filter insert (20.1, 20.11) is composed of metal, preferably stainless steel, or plastic, preferably polypropylene or polyamide.

6. Agricultural field spraying device according to at least one of the preceding claims, **characterized in that** the filter element (6) has at least one unfiltered outlet and/or at least one filtered outlet.

7. Agricultural field spraying device according to Claim 1, **characterized in that** a pump (3), in particular a centrifugal pump, is arranged directly downstream of the suction filter (6.I) and directly upstream of the pressure filter (6.II).

8. Agricultural field spraying device according to Claim 1, **characterized in that** the suction filter (6.1) and the pressure filter (6.II) are connectable in a flow-conducting manner by a pressure valve, preferably a spring-loaded pressure-limiting valve (I.II).

9. Agricultural field spraying device according to at least one of the preceding claims, **characterized in that** the fluid components combined to form functional units are able to be actuated by remote control, preferably are able to be activated electrically, pneumatically or hydraulically.

## Revendications

1. Pulvérisateur à cultures agricole comprenant un circuit de produit à pulvériser, comprenant des éléments structuraux à fluide qui sont couplés entre eux en conduction d'écoulement au moyen de conduites de fluide présentes, le pulvérisateur à cultures possédant au moins un bloc à fluide dans lequel plusieurs éléments structuraux à fluide sont regroupés en unités fonctionnelles qui peuvent être commandées séparément et/ou par groupes, l'au moins un bloc à fluide étant réalisé sous la forme d'un élément filtrant (6), **caractérisé en ce que** le pulvérisateur à cultures agricole comporte au moins deux éléments filtrants (6), **en ce qu'**au moins un élément filtrant (6) est réalisé sous la forme d'un filtre d'aspiration (6.I) et au moins un élément filtrant (6) est réalisé sous la forme d'un filtre de refoulement (6.II).

2. Pulvérisateur à cultures agricole selon la revendication 1, **caractérisé en ce que** les éléments structuraux à fluide sont réalisés sous la forme de vannes (II.2 - II.18, II.2 - II.18), de raccords (I.3, I.16), de vannes d'arrêt, notamment un robinet destiné à laisser s'écouler une quantité restante et/ou servant au remplissage d'un filtre, de raccords, de collecteurs ou encore de composants hydrauliques actifs ou passifs.

3. Pulvérisateur à cultures agricole selon la revendication 2, **caractérisé en ce que** les vannes (II.2 - II.18, II.2 - II.18) sont réalisées sous la forme de vannes à siège.

4. Pulvérisateur à cultures agricole selon au moins l'une des revendications précédentes, **caractérisé en ce que** l'élément filtrant (6) comporte un boîtier (15.I, 15.II) **en ce que** les éléments structuraux à fluide sont intégrés dans le boîtier (15.I, 15.II).

5. Pulvérisateur à cultures agricole selon au moins l'une des revendications précédentes, **caractérisé en ce que** l'élément filtrant (6) comporte au moins une cartouche filtrante (20.I, 20.II), de préférence pliée en accordéon et possédant une surface filtrante configurée comme un tamis, **en ce que** la cartouche filtrante (20.I, 20.II) se compose de métal, de préférence de l'acier inoxydable, ou de matière plastique, de préférence du polypropylène ou du polyamide.

6. Pulvérisateur à cultures agricole selon au moins l'une des revendications précédentes, **caractérisé en ce que** l'élément filtrant (6) possède au moins une sortie non filtrée et/ou au moins une sortie filtrée.

7. Pulvérisateur à cultures agricole selon la revendication 1, **caractérisé en ce qu'**une pompe (3), notamment une pompe centrifuge, est disposée directement en aval du filtre d'aspiration (6.I) et directement en amont du filtre de refoulement (6.II).

8. Pulvérisateur à cultures agricole selon la revendication 1, **caractérisé en ce que** le filtre d'aspiration (6.I) et le filtre de refoulement (6.II) peuvent être reliés en conduction d'écoulement par une vanne de pression, de préférence une vanne de limitation de pression (I.II) chargée par un ressort.

9. Pulvérisateur à cultures agricole selon au moins l'une des revendications précédentes, **caractérisé en ce que** les éléments structuraux à fluide regroupés en unités fonctionnelles peuvent être actionnés par commande à distance, de préférence commandables électriquement, pneumatiquement ou hydrauliquement.
